# EUROPEAN PATENT APPLICATION

(11) **EP 4 640 623 A1**
(43) Date of publication of application: **29.10.2025**
(21) Application number: 24172494.7
(22) Date of filing: 25.04.2024
(51) Int. Cl.: C01B 3/04, C01B 3/50

(54) **PROCESS FOR PRODUCING GAS COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Ulber, Dieter, 60439 Frankfurt am Main (DE); Shrivastava, Swatantra Kumar, 60439 Frankfurt am Main (DE); Kuzniar, Jakub, 31-545 Krakow (PL)
(74) Representative: Air Liquide

(57) **Abstract**

The invention relates to a process (100) for producing a hydrogen product (81) from an endothermic cracking reaction of an ammonia feed (4), comprising the following steps:
- providing (S10) the ammonia feed to a cracking unit (210),
- in said cracking unit, performing (S20) the endothermic cracking reaction of the ammonia feed, thereby producing a cracked gas (80) containing hydrogen (81), nitrogen (82) and unconverted ammonia (83),
- in said cracking unit, combusting the separated unconverted ammonia in a combustion step (S40) to provide heat to the endothermic cracking reaction,
- reducing (S50) a cracking temperature (Tc) of the endothermic cracking reaction, thus increasing the amount of unconverted ammonia in the cracked gas and to be combusted to provide heat to the endothermic cracking reaction,
- controlling (S60) the flow of the ammonia feed directed to the cracking unit to produce a desired amount of hydrogen product (Psp).

## Description

The invention relates to a process for producing gas comprising hydrogen.

The production of a cracked gas comprising hydrogen and nitrogen by an endothermic cracking reaction of an ammonia feed stream can be done in a catalytic reactor at elevated temperatures, generally from 500°C to 850°C. Such a unit typically comprises a metallic shell, a catalyst and a heat source to provide heat to the endothermic reaction. A PSA device or system can be used to separate the cracked gas, recover the hydrogen and generate a PSA tail gas (or off gas) mainly composed of nitrogen, hydrogen, and unconverted ammonia. The PSA tail gas can be used as a fuel to bring heat to the endothermic cracking reaction.

It is already known to carry out a process with controlling the total carbon intensity value of the process by adjusting the ratio of the tail gas(es) from the PSA(s), to a carbon-containing fuel, such as natural gas or a mixture of a carbon-containing fuel with cracked gas. This adjustment ensures that the overall carbon intensity value of the renewable hydrogen product gas remains below a predetermined limit.

This process has several drawbacks. For instance, adjusting the primary and/or secondary fuel flow to change carbon intensity may alter the overall duty of the combined fuel. This change could result in excessively high furnace temperatures or an undesirable increase in byproduct steam production.

The invention aims to address these drawbacks.

For this purpose, the invention proposes a process for producing a hydrogen product from an endothermic cracking reaction of an ammonia feed, comprising the following steps:
- providing the ammonia feed to a cracking unit,
- in said cracking unit, performing the endothermic cracking reaction of the ammonia feed, thereby producing a cracked gas containing hydrogen, nitrogen and unconverted ammonia,
- separating the unconverted ammonia from a produced hydrogen containing flow,
- in said cracking unit, combusting the separated unconverted ammonia in a combustion step to provide heat to the endothermic cracking reaction,
- reducing a cracking temperature of the endothermic cracking reaction, thus increasing the amount of unconverted ammonia in the cracked gas and to be combusted to provide heat to the endothermic cracking reaction,
- controlling the flow of the ammonia feed directed to the cracking unit to produce a desired amount of hydrogen product.

In other words, the invention aims in particular to change the cracking temperature of the endothermic cracking reaction, thus changing the concentration of uncovered ammonia in the cracked gas and thus in the fuel to the combustion step, so to provide required/desired heat to the endothermic cracking reaction.

The present invention enables minimizing ammonia consumption and achieves lowest ammonia feed to hydrogen product ratio. Thanks to the invention, the process presents a higher thermal efficiency and avoids the generation of any byproduct steam.

In the invention, the process enables the absence of export steam. The process according to the invention allows for operation with minimum trim fuel at an optimum design point, resulting in a higher plant efficiency. The operating conditions of the cracker, particularly the cracker temperature, and the firing conditions, mainly the combustion air preheating temperature Tca, are controlled to achieve zero steam export and minimal or zero trim fuel. The plant is designed to reach zero steam export and zero trim fuel at an optimal operating point.

In the present invention, the ammonia conversion is lower compared to other schemes, with the recycling of unconverted ammonia being an important aspect.

The invention may comprise at least one of the following features, taken independently or in combination:

In one embodiment, the endothermic cracking reaction is performed with an ammonia conversion rate between 70% and 98%, in particular between 85% and 95%

In one embodiment, the step of separating the unconverted ammonia comprises a step of separating the unconverted ammonia from said produced hydrogen containing flow by absorption, in particular by washing the cracked gas, for example with water. In particular, the step of separating the unconverted ammonia further comprises a step of recovering the absorbed unconverted ammonia by distillation.

In one embodiment, the process comprises a step of recovering said hydrogen product, for example by pressure swing adsorption, thereby generating a hydrogen recovery tail gas. In particular, recovering said hydrogen product comprises recovering said hydrogen product from said produced hydrogen containing flow thereby generating the hydrogen recovery tail gas. In particular, the hydrogen recovery tail gas is combusted in said combustion step to provide heat to the endothermic cracking reaction.

In one embodiment, the process according to the invention does not compromise the hydrogen recovery rate of a PSA unit.

In ammonia cracking, the main internal steam user is often a distillation column, which separates unconverted ammonia from wash water.

In one embodiment, the process comprises a step of providing a combustion air flow and the combustion step is performed with said combustion air flow as oxidant. In particular, the provided combustion air flow is preheated in a combustion air flow preheating step to a preheating temperature.
a. In one embodiment, the process further comprises the following steps:
   - providing a cracking temperature setpoint for the endothermic cracking reaction, in particular a setpoint for the temperature of the cracked gas measured at the outlet of the cracking unit,

- determining an actual heat quantity provided by the combusted separated unconverted ammonia and/or the combusted hydrogen recovery tail gas and/or the preheated combustion air to the endothermic cracking reaction in the cracking unit (or any other fuel or stream in addition to either one or more of these streams),
- if the determined actual heat quantity provided to the endothermic cracking reaction is lower than a required heat to reach said cracking temperature setpoint, temporarily providing a trim fuel quantity and combusting said trim fuel quantity to provide heat to the endothermic cracking reaction,
- performing said step of reducing the cracking temperature thereby reducing the required heat to reach said reduced cracking temperature,
- reducing said trim fuel quantity provided according to said reduced required heat.

By reducing the cracking temperature, it is possible to reduce a heat input to the cracker unit.

In one embodiment, reducing the cracking temperature comprises providing a lower cracking temperature setpoint.

In one embodiment, the cracking temperature is reduced, in particular incrementally reduced, until no more trim fuel needs to be provided (the trim fuel quantity provided equals zero).

In one embodiment, the process comprising the step of preheating the combustion air flow is performed to an increased preheating temperature if the determined actual heat quantity provided to the endothermic cracking reaction is lower than a required heat to reach said cracking temperature setpoint.

In one embodiment, said required heat to reach said cracking temperature setpoint is calculated as a function of the flow of ammonia feed and a temperature of the ammonia feed.

In one embodiment, the step of temporarily providing the trim fuel quantity is performed in order to provide a missing heat to the endothermic cracking reaction to reach said cracking temperature setpoint.

In one embodiment, by the step of reducing the cracking temperature, the ammonia conversion rate in the cracking unit decreases, which results in a decrease of the produced hydrogen product and an increase of the separated and combusted unconverted ammonia.

In one embodiment, the process comprises providing a setpoint for the flow of the ammonia feed to produce said desired amount of hydrogen product as a function of the cracking temperature and controlling the flow of the ammonia feed directed to the cracking unit according to said setpoint for the flow of the ammonia feed.

In one embodiment, the process comprises a step of increasing a flow rate of the ammonia feed provided to the cracking unit to produce said desired amount of hydrogen product at said reduced cracking temperature. This enables to maintain a flow of hydrogen product at the desired level.

In one embodiment, the process comprises a step of cooling an effluent gas from the cracking unit in an effluent gas boiler, thereby generating steam.

In particular the combustion air flow preheating step comprises preheating at least part of the combustion air flow in a combustion air preheater by heat exchange with the effluent gas thereby cooling the effluent gas.

In particular, the step of cooling the effluent gas is performed by vaporization of a boiler feed water.

In one embodiment, the effluent gas comprises said cracked gas and/or a flue gas generated in said combustion step. The effluent gas may, in an example, encompass several effluent gas streams. For instance, the effluent gas may comprise the flue gas for the combustion air preheating. In an embodiment of the invention, for the steam production, the effluent gas may comprise be either flue gas or cracked gas.

In particular, the step of cooling the effluent gas from the cracking unit comprises cooling said flue gas in a flue gas boiler, thereby generating steam.

In particular, the combustion air flow preheating step is performed upstream of the step of cooling the effluent gas in the effluent gas circulation direction.

In one embodiment, the process further comprises the following steps:
- calculating an actual heat quantity carried by the effluent gas cooled in the effluent gas boiler, in particular carried by the flue gas cooled in the flue gas boiler,
- comparing said actual heat quantity carried by the effluent gas with a required heat for a required steam generation,
- adjusting a preheating temperature of the combustion air flow preheated by heat exchange with the effluent gas to adjust the actual heat quantity carried by the effluent gas and reduce a difference between said actual heat quantity carried by the effluent gas and said required heat for a required steam generation, in particular to match said actual heat quantity carried by the effluent gas to said required heat for a required steam generation.

In one embodiment, the step of adjusting the preheating temperature of the combustion air flow comprises a step of adjusting an amount of the combustion air flow preheated in said combustion air preheater, for example by adjusting an amount of the combustion air flow diverted from the combustion air preheater. In this example, a part of the combustion air is bypassed around the combustion air preheater.

In particular, if the actual heat quantity carried by the effluent gas is lower than the required heat for a required steam generation, the process comprises decreasing the preheating temperature of the combustion air flow preheated by heat exchange with the effluent gas to increase the heat quantity carried by the effluent gas.

For example, decreasing the preheating temperature of the combustion air flow comprises decreasing an amount of the combustion air flow preheated in said combustion air preheater, in particular by increasing an amount of the combustion air flow diverted from the combustion air preheater.

In particular, if the actual heat quantity carried by the effluent gas is higher than the required heat for a required steam generation, the process comprises increasing the preheating temperature of the combustion air flow preheated by heat exchange with the effluent gas to decrease the actual heat quantity carried by the effluent gas.

For example, increasing the preheating temperature of the combustion air flow comprises increasing an amount of the combustion air flow preheated in said combustion air preheater, in particular by decreasing an amount of the combustion air flow diverted from the combustion air preheater.

Increasing the preheating temperature of the combustion air further increases the actual heat quantity provided to the endothermic cracking reaction, thereby reducing the trim fuel quantity needed to provide missing heat to the endothermic cracking reaction, and also reduces an amount of flue gas generated.

In one embodiment, the step of adjusting a preheating temperature of the combustion air flow is performed with a default temperature between 400 °C and 500°C.

In one embodiment, a preheating temperature of the combustion air flow is adjusted ranging between 250°C and 650°C.

In one embodiment, the process comprises a step of recycling in the process at least part of the generated steam, in particular recycling all the generated steam

In one embodiment, the step of recycling is performed by said distillation using at least part of the generated steam.

In one embodiment, the step of recycling is performed by said distillation using all of the generated steam.

In one embodiment, the required steam generation is determined based on an amount of unconverted ammonia in the cracked gas, in particular an amount of unconverted ammonia measured in the cracked gas and/or based on the required heat to reach said cracking temperature setpoint, in particular based on the reduced required heat.

In particular, the required steam generation is determined based on a steam amount required for said distillation to recover the absorbed unconverted ammonia.

In one embodiment, the step of recycling is performed by said distillation also using steam imported to the process.

In one embodiment, the step of recycling is performed by said distillation with no exported steam from the process.

Note that all of the features and configurations described above are purely examples. Other features, details and advantages of the invention will become clearer on reading the detailed description set out below, together with several embodiments provided purely as examples and by way of indication, with reference to the attached schematic drawing, in which:
Fig. 1 schematically shows a process that includes an ammonia feed control for producing a hydrogen product of the invention, as an illustrative and non-limiting example.
Fig. 2 schematically shows a trim fuel firing control of the process for producing a hydrogen product of the invention, as an illustrative and non-limiting example.
Fig. 3 schematically shows a steam control of the process for producing a hydrogen product of the invention, as an illustrative and non-limiting example.
Fig. 4 schematically shows an apparatus of the invention as an illustrative and non-limiting example.

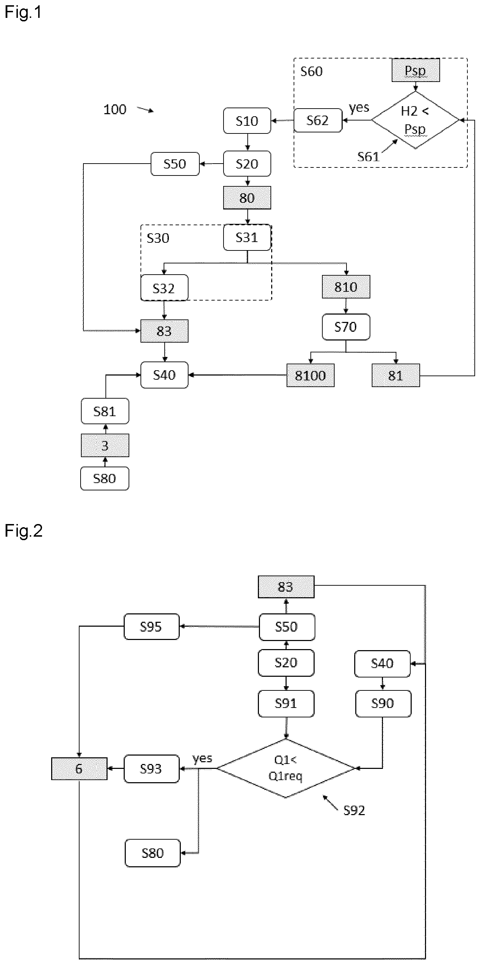

Referring to figures 1 to 4, an example of a process 100 for producing a hydrogen product 81 from an endothermic cracking reaction of an ammonia feed 4.

The process 100 for producing the hydrogen product 81 comprises the following steps:
- providing (S10) the ammonia feed 4 to a cracking unit 210,
- in said cracking unit 210, performing (S20) the endothermic cracking reaction of the ammonia feed 4, thereby producing a cracked gas 80 containing hydrogen 81, nitrogen 82 and unconverted ammonia 83,
- separating (S30) the unconverted ammonia 83 from a produced hydrogen containing flow 810,
- in said cracking unit 210, combusting the separated unconverted ammonia 83 in a combustion step (S40) to provide heat to the endothermic cracking reaction,
- reducing (S50) a cracking temperature Tc of the endothermic cracking reaction (S20), thus increasing the amount of unconverted ammonia 83 to be combusted to provide heat to the endothermic cracking reaction,
- controlling (S60) the flow of the ammonia feed 4 directed to the cracking unit 210 to produce a desired amount of hydrogen product Psp.

The produced hydrogen containing flow 810 separated from the unconverted ammonia 83 comprises hydrogen 81 and nitrogen 82. It is to be understood that the cracked gas 80 is separated into the unconverted ammonia 83 and the produced hydrogen containing flow 810.

The endothermic cracking reaction (S20) is performed with an ammonia conversion rate between 70 and 98%, in particular between 85% and 95%. This ammonia conversion rate range permits to avoid that a heating value of the unconverted ammonia 83 is being higher than required as a fuel duty for the process 100.

The step (S30) of separating the unconverted ammonia 83 from a produced hydrogen containing flow 810 comprises a step (S31) of separating the unconverted ammonia 83 from said produced hydrogen containing flow 810 by absorption with a washing column 230. This step (S31) is performed by washing of the cracked gas 80 with water.

Following the step (S31), a step (S32) of recovering the absorbed unconverted ammonia 83 performed by a distillation column 240, in order to separate the unconverted ammonia 83 from wash water coming from the washing column 230.

The process 100 comprises a step (S70) of recovering said hydrogen product 81 from the cracked gas 80 by pressure swing adsorption performed by a PSA unit 270, thereby generating a hydrogen recovery tail gas 8100. Consequently, the hydrogen product 81 is recovered from produced hydrogen containing flow 810. The hydrogen recovery tail gas 8100 is combusted in combustion step (S40) to provide heat to the endothermic cracking reaction.

The process 100 does not compromise the hydrogen product 81 recovery rate of the PSA unit 270.

The process 100 comprises a step (S80) of preheating a combustion air flow 3 to be combusted. The step (S80) of preheating is performed to a preheating temperature Tca by a combustion air preheater 310. Then the preheated combustion air flow 3 is provided (S81) to the combustion step (S40).

The process 100 comprises the step (S60) of controlling the flow of the ammonia feed 4 directed to the cracking unit 210 to produce a desired amount of hydrogen product Psp. For this purpose, this step (S60) comprises a step (S61) of comparison between the amount hydrogen product 81 and the desired amount of hydrogen product Psp. If hydrogen product 81 is lower than the desired amount of hydrogen product Psp, (S62) the flow rate of the ammonia feed 4 provided (S10) to the cracking unit 210 is increased to produce said desired amount of hydrogen product Psp at said reduced cracking temperature Tc. This enables to maintain a flow of hydrogen product 81 at the desired level Psp.

Referring to figure 2, the process 100 comprises a trim fuel firing control according to the following steps:
- determining (S90) an actual heat quantity Q1 provided by the step (S40) of combustion.
- providing (S91) a cracking temperature setpoint Tsp for the endothermic cracking reaction (S20). The temperature setpoint Tsp is the temperature of the cracked gas 80 measured at the outlet of the cracking unit 210, to produce said desired amount of hydrogen product Psp,
- if (S92) the determined actual heat quantity Q1 is lower than a required heat Q1req to reach said cracking temperature setpoint Tsp, temporarily providing (S93) a trim fuel 6 quantity and combusting (S40) said trim fuel 6 quantity to provide heat to the endothermic cracking reaction,
- performing the step (S50) of reducing the cracking temperature Tc thereby reducing the required heat Q1req to reach said reduced cracking temperature Tc,
- reducing (S95) said trim fuel 6 quantity provided according to said reduced required heat Q1 req.

The step (S93) of temporarily providing the trim fuel 6 quantity is performed in order to provide a missing heat to the endothermic cracking reaction to reach said cracking temperature setpoint Tsp.

The cracking temperature Tc is incrementally reduced, until no more trim fuel 6 needs to be provided. In other words, until the trim fuel 6 quantity provided equals zero.

For step (S50) of reducing the cracking temperature Tc the needed heat quantity for the endothermic cracking reaction is reduced and it is possible to reduce a heat input to the cracker unit. This step (S50) comprises providing a lower cracking temperature setpoint Tsp. Another consequence of this step (S50) is to decrease the ammonia conversion rate in the cracking unit 210, which results in a decrease of the produced hydrogen product 81 and an increase of the separated and combusted unconverted ammonia 83. Then, the actual heat quantity provided by the combusted separated unconverted ammonia 83 may be increased when the feed flow is increased to compensate for the loss of hydrogen product.

If (S92) the determined actual heat quantity Q1 is lower than a required heat Q1req to reach said cracking temperature setpoint Tsp, then the step (S80) of preheating the combustion air flow 3 is performed to an increased preheating temperature Tca.

The required heat Q1req is based on a calculation of the complete heat and material balance over the reactor including the heat of reaction. The required heat Q1req for the endothermic cracking reaction is calculated once in the process 100 simulation software and tabularized over the complete range of the feed flow rates and temperatures. Then Q1req is calculated as a function of the flow of ammonia feed 4 and a temperature of the ammonia feed 4 according to Q1req = f (T, Li)) and is interpolated between two known values.

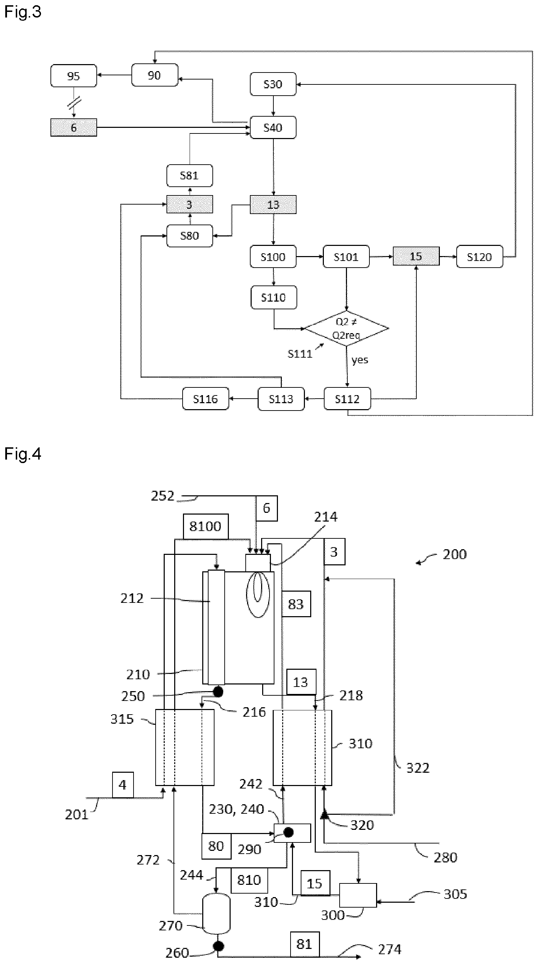

Referring to figure 3, the process 100 comprises a generated steam control.

The step of the combustion (S40) produces a flue gas 13 in the cracking unit 210. Flue gas 13 which is part of an effluent gas from the cracking unit 210.

The step (S80) of preheating the combustion air flow 3 is performed in the combustion air preheater 310 by heat exchange with the flue gas 13.

The process 100 comprises a step (S100) of cooling the flue gas 13 from the cracking unit 210 in a flue gas boiler 300. This step (S100) of cooling the flue gas 13 is performed by vaporization of a boiler feed water 305 and using the heat from flue gas 13 to generate (S101) steam 15.

The preheating step (S80) of the combustion air flow 3 is performed upstream of the step (S100) of cooling the flue gas 13 in the flue gas 13 circulation direction.

The process 100 comprises the steam 15 control comprising the following steps:
- calculating (S110) an actual heat quantity Q2 carried by the flue gas 13 cooled in the flue gas boiler 300,
- comparing (S111) the actual heat quantity Q2 with a required heat Q2req for a required steam 15 generation,
- adjusting (S112) the preheating temperature Tca of the combustion air flow 3 preheated to adjust the heat quantity Q2 carried by the flue gas 13 and reduce a difference between said heat quantity Q2 carried by the flue gas 13 and said required heat Q2req for a required steam 15 generation.

The step (S112) of adjusting Tca is performed in order to match Q2 to the required heat Q2req.

Following the step (S112) of adjusting Tca, a step (S113) of adjusting the amount of the preheated combustion air flow 3 in the combustion air preheater 310.

The step (S113) of adjusting the amount of the combustion air flow 3 preheated in said combustion air preheater 310 is performed by a diverting part 320, for example a bypass, of the combustion air flow 3 from the combustion air preheater 310.

For example, if (S111) Q2 is lower than Q2req, the preheating temperature Tca of the preheated combustion air flow 3 decreases (S112) by heat exchange with the flue gas 13, thereby increasing the heat quantity Q2 carried by the flue gas 13 and increasing the amount of generated steam 15. Then the decreasing (S113) of the amount of the combustion air flow 3 preheated occurs in said combustion air preheater 310. The amount of the combustion air flow 3 diverted from the combustion air preheater 310 increases (S116), by the bypass 320.

In the opposite, during the step (S111) of comparing Q2 and Q2req, if Q2 is higher than Q2req, the preheating temperature Tca increases (S112) of the combustion air flow 3 preheated and the heat quantity Q2 carried by the flue gas decrease. Then the increasing (S113) of the amount of the combustion air flow 3 preheated occurs in said combustion air preheater 310. The amount of the combustion air flow 3 diverted by the bypass 320 from the combustion air preheater 310 decreases (S116).

In this second example, the step (S112) of increasing the preheating temperature Tca increases the actual heat quantity Q1 provided to the endothermic cracking reaction (S90), thereby reducing the trim fuel 6 quantity needed to provide missing heat to the endothermic cracking reaction (S95), and also reduces an amount of flue gas 13 generated (S100).

The lower the heat input to the endothermic cracking reaction and the temperature Tc of the endothermic cracking reaction, the higher the thermal efficiency, the lower steam 15 is generated (S101).

The step (S112) of adjusting a preheating temperature Tca is performed with a default temperature between 400 °C and 500°C and is adjusted in a range between 250°C and 650°C.

The process 100 comprises a step (S120) of recycling in the process 100, the generated steam 15.

By the term "recycling in the process 100", we mean recycling for internal needs of the process 100.

The step of recycling (S120) is performed by distillation using the generated steam 15. The internal steam 15 user is the distillation column 240.

The required heat Q2req is determined based on the amount of unconverted ammonia 83 in the cracked gas 80, and on the steam 15 amount required for said distillation to recover the absorbed unconverted ammonia 83.

The heat Q2 quantity carried by the flue gas 13 is calculated with the flow of the flue gas 13 generated (S100) from a stoichiometric combustion of actual flows of individual fuels comprising the hydrogen recovery tail gas flow 8100, an unconverted ammonia flow 83, a potential trim fuel flow 6 and an excess of combustion air flow after the combustion.

The calculation of Q2 includes a heat capacity of each of the flue gasses created by the combustion (S40) of one mole of given fuels and a measured temperature of the flue gas 13 at an inlet to the flue gas boiler 300.
Q2 is calculated according to the formula: Q2 = F_{fgtrim} × Fₜᵣᵢₘ × Cpₜᵣᵢₘ × T_{Fg} + F_{fgNH3} × F_{Nh3} × Cp_{NH3} × T_{FG} + F_{fgTG} × F_{TG} × Cp_{TG} × T_{FG} + F_{fgCA} × Cp_{CA} × T_{CA} Where Cp is molar heat capacity of flue gas created from stoichiometric combustion of given fuel. The Ftrim is the flue gas flow volume created by stoichiometric combustion of 1 mole of trim fuel 6 as the F_{fgtrim} corresponds to the trim fuel flow 6. NH3 corresponds to unconverted ammonia 83, TG to hydrogen recovery tail gas 8100 and CA to combustion air flow. Heat capacities of flue gases and measured temperature of flue gas mixture are collected at the inlet to flue gas boiler 300.

The calculation of Q2req is based on the ammonia concentration in the flue gas to the distillation column 240, and flue gas flow. The unconverted ammonia 83 concentration is measured in the reactor's cracked gas. This cracked gas goes into the wash column 230 and the liquid rich in absorbed unconverted ammonia 83 is sent to the distillation column 240 to recover the unconverted ammonia 83 in a gaseous form. The heat required Q2req can be calculated once for various range of temperatures and flows, tabulated and interpolated between various temperature and flue flow points. Resultant parameter of required steam flow is calculated.

The figure 4 discloses an apparatus 200 of the invention, performing the process 100 described in figures 1 to 3.

The apparatus 200 comprises a cracking unit 210 with a reactor 212 for performing an endothermic cracking reaction of an ammonia feed 4 into a cracked gas 80 comprising hydrogen product 81, nitrogen 82, and unconverted ammonia 83. An ammonia feed duct 201 is arranged to feed the ammonia feed 4 to the reactor 212.

A wash column 230 is arranged to wash the cracked gas 80 with water and absorb the unconverted ammonia 83.

A cracked gas duct 216 is arranged for the circulation of the cracked gas 80 from the reactor 212 to the washing column 230.

Following the wash column 230, a distillation column 240 is arranged to separate the unconverted ammonia 83 from wash water by recover the absorbed unconverted ammonia 83, thus producing the separated unconverted ammonia 83 and a produced hydrogen containing flow 810.

The cracking unit 210 comprises a furnace 214 arranged to combust the separated unconverted ammonia 83 in order to provide heat to the endothermic cracking reaction.

An unconverted ammonia stream duct 242 is arranged for the circulation of the unconverted ammonia 83 from the distillation column 240 to the furnace 214, and a produced hydrogen containing flow duct 244 is arranged for the circulation of the produced hydrogen containing flow 810 from the distillation column 240 to a pressure swing adsorption unit 270.

The pressure swing adsorption unit, also known as PSA unit 270, is arranged to separate the hydrogen product 81 from the produced hydrogen containing flow 810, thus producing a hydrogen recovery tail gas 8100.

A hydrogen recovery tail gas duct 272 is arranged for the circulation of the hydrogen recovery tail gas 8100 from the PSA unit 270 to the furnace 214, and a hydrogen product duct 274 is arranged for the circulation of the hydrogen product 81 out of the PSA unit 270.

The furnace 214 is arranged to combust the hydrogen recovery tail gas 8100 to provide heat for the endothermic cracking reaction.

The furnace 214 is arranged to combust a combustion air flow 3 to provide heat for the endothermic cracking reaction.

A combustion air duct 280 is arranged for the circulation of the combustion air 3 from the exterior of the apparatus 200 to the furnace 214.

A combustion air preheater 310 is arranged to preheat the combustion air 3, in order to provide a preheated combustion air 3 to the furnace 214.

A diverting part 320, for example a bypass, is arranged to divert the combustion air from the combustion air preheater 310. A bypass duct 322 is arranged for the circulation of the combustion air 3 from the bypass 320 to the furnace 214.

The furnace 214 is arranged to produce flue gas 13 from the combustion of the unconverted ammonia 83, hydrogen recovery tail gas 8100, combustion air 3 and a trim fuel 6.

A flue gas duct 218 is arranged for the circulation of the flue gas 13 from the furnace 214 to a flue gas boiler 300.

The flue gas boiler 300 is arranged to perform a vaporization of a boiler feed water 305 in order to generate steam 15 from the heat of the flue gas 13.

The flue gas boiler 300 is arranged to recover the heat of the flue gas 13 from thermal exchanges between the flue gas duct 218 coming from the furnace 214 and combustion air duct 280 coming from the exterior of the apparatus 200. The combustion air preheater 310 is arranged to perform these thermal exchanges.

A generated steam duct 310 is arranged for the circulation from the flue gas boiler 300 to the distillation column 240.

The apparatus 200 comprises further several control units such as:
- a cracking temperature Tc control unit 250 arranged to measure and reduce the cracking temperature Tc of the endothermic cracking reaction, at the outlet of the cracking unit 210,
- an ammonia feed control unit 260 is arranged to control the flow of the ammonia feed 4 directed to the cracking unit 210, in order to produce the desired amount of hydrogen product Psp. Ammonia feed control unit 260 is arranged in downstream of the PSA unit 270, after any losses, on the hydrogen product duct 330,
- a steam generation control unit 290 is arranged to adjust the generation of steam 15.

## Claims

1. Process (100) for producing a hydrogen product (81) from an endothermic cracking reaction of an ammonia feed (4), comprising the following steps:
- providing (S10) the ammonia feed (4) to a cracking unit (210),
- in said cracking unit (210), performing (S20) the endothermic cracking reaction of the ammonia feed (4), thereby producing a cracked gas (80) containing hydrogen (81), nitrogen (82) and unconverted ammonia (83),
- separating (S30) the unconverted ammonia (83) from a produced hydrogen containing flow (810),
- in said cracking unit (210), combusting the separated unconverted ammonia (83) in a combustion step (S40) to provide heat to the endothermic cracking reaction (S20),
- reducing (S50) a cracking temperature (Tc) of the endothermic cracking reaction (S20), thus increasing the amount of unconverted ammonia (83) in the cracked gas and to be combusted to provide heat to the endothermic cracking reaction,
- controlling (S60) the flow of the ammonia feed (4) directed to the cracking unit (210) to produce a desired amount of hydrogen product (Psp).

2. Process (100) according to claim 1, wherein said step (S30) of separating the unconverted ammonia (83) comprises a step (S31) of separating the unconverted ammonia (83) from said produced hydrogen containing flow (810) by absorption, in particular by washing the cracked gas (80), for example with water, in particular the step (S30) of separating the unconverted ammonia (83) further comprises a step (S32) of recovering the absorbed unconverted ammonia (83) by distillation.

3. Process (100) according to any of the preceding claims, further comprising a step (S70) of recovering said hydrogen product (81) from said produced hydrogen containing flow (810), for example by pressure swing adsorption, thereby generating a hydrogen recovery tail gas (8100), and wherein the hydrogen recovery tail gas (8100) is combusted in said combustion step (S40) to provide heat to the endothermic cracking reaction.

4. Process (100) according to any of the preceding claims, further comprising a step (S80) of providing a combustion air flow (3) and the combustion step (S40) is performed with said combustion air flow (3) as oxidant, wherein the provided combustion air flow (3) is preheated in a combustion air flow 3 preheating step (S81) to a preheating temperature (Tca).

5. Process (100) according to claims 3 and 4, further comprising the following steps:
- providing (S91) a cracking temperature setpoint (Tsp) for the endothermic cracking reaction,
- determining (S90) an actual heat quantity (Q1) provided by the combusted separated unconverted ammonia (83) and/or the combusted hydrogen recovery tail gas (8100) and/or the preheated combustion air (3) to the endothermic cracking reaction in the cracking unit (210),
- if (S92) the determined actual heat quantity (Q1) provided to the endothermic cracking reaction is lower than a required heat Q1req to reach said cracking temperature setpoint (Tsp), temporarily providing (S93) a trim fuel (6) quantity and combusting (S40) said trim fuel (6) quantity to provide heat to the endothermic cracking reaction,
- performing said step (S50) of reducing the cracking temperature (Tc) thereby reducing the required heat (Q1req) to reach said reduced cracking temperature (Tc),
- reducing (S95) said trim fuel (6) quantity provided according to said reduced required heat (Q1req).

6. Process (100) according to the preceding claim, wherein the step (S81) of preheating the combustion air flow (3) is performed to an increased preheating temperature (Tca) if (S92) the determined actual heat quantity (Q1) provided to the endothermic cracking reaction is lower than a required heat (Q1req) to reach said cracking temperature setpoint (Tsp).

7. Process (100) according to any of preceding claims, comprising a step (S61) of increasing a flow rate of the ammonia feed (4) provided to the cracking unit (210) to produce said desired amount of hydrogen product (Psp) at said reduced cracking temperature (Tc).

8. Process (100) according to any of preceding claims, comprising a step (S100) of cooling an effluent gas from the cracking unit (210) in an effluent gas boiler (300), thereby generating (S101) steam (15), and the combustion air flow (3) preheating step (S40) comprises preheating at least part of the combustion air flow (3) in a combustion air preheater (310) by heat exchange with the effluent gas, thereby cooling (S100) the effluent gas.

9. Process (100) according to claim 8, wherein the effluent gas comprises a flue gas (13) generated in said combustion step (S40) and the step (S100) of cooling the effluent gas from the cracking unit (210) comprises cooling said flue gas (13) in a flue gas boiler (300), thereby generating steam (15).

10. Process (100) according to claim 8 or claim 9, further comprising the following steps:
- calculating (S110) an actual heat quantity (Q2) carried by the effluent gas cooled in the effluent gas boiler (300), in particular carried by the flue gas (13) cooled in the flue gas boiler (300),
- comparing (S111) said actual heat quantity (Q2) carried by the effluent gas with a required heat (Q2req) for a required steam (15) generation,
- adjusting (S112) a preheating temperature (Tca) of the combustion air flow (3) preheated by heat exchange with the effluent gas to adjust the actual heat quantity (Q2) carried by the effluent gas and reduce a difference between said actual heat quantity (Q2) carried by the effluent gas and said required heat (Q2req) for a required steam (15) generation.

11. Process (100) according to the preceding claim, wherein the step (S112) of adjusting the preheating temperature (Tca) of the combustion air flow (3) comprises a step (S113) of adjusting an amount of the combustion air flow (3) preheated in said combustion air preheater (310).

12. Process (100) according to claim 10 or claim 11, wherein if said actual heat quantity (Q2) carried by the effluent gas is higher than the required heat (Q2req) for a required steam (15) generation, the process (100) comprises increasing the preheating temperature (Tca) of the combustion air flow (3) preheated by heat exchange with the effluent gas to decrease the actual heat quantity (Q2) carried by the effluent gas.

13. Process (100) according to any of the preceding claims, comprising a step (S115) of recycling in the process (100) at least part of the generated steam (15), in particular recycling all the generated steam (15).

14. Process according to claim 13, wherein the step of recycling (S115) the generated steam (15) is performed by said distillation using at least part of the generated steam (15).

15. Process (100) according to any of the preceding claims, wherein the required steam generation is determined based on an amount of unconverted ammonia in the cracked gas, in particular based on a steam amount required for said distillation to recover the absorbed unconverted ammonia.
